(19) **Europäisches Patentamt**

**European Patent Office**

**Office européen des brevets**

(11) Veröffentlichungsnummer: **0 239 160 B1**

(12) # EUROPÄISCHE PATENTSCHRIFT

(45) Veröffentlichungstag der Patentschrift: **12.08.92**

(21) Anmeldenummer: **87200452.8**

(22) Anmeldetag: **11.03.87**

(51) Int. Cl.5: **B29D 30/42**

(54) **Reifenkarkasse.**

(30) Priorität: **20.03.86 CH 1126/86**
**05.09.86 CH 3575/86**

(43) Veröffentlichungstag der Anmeldung:
**30.09.87 Patentblatt 87/40**

(45) Bekanntmachung des Hinweises auf die
Patenterteilung:
**12.08.92 Patentblatt 92/33**

(84) Benannte Vertragsstaaten:
**AT BE CH DE ES FR GB IT LI LU NL**

(56) Entgegenhaltungen:
**EP-A- 0 117 137**
**DE-A- 2 504 181**
**DE-A- 2 819 247**
**FR-A- 2 207 010**
**US-A- 3 237 673**

(73) Patentinhaber: **Rhône-Poulenc Viscosuisse
SA**

**CH-6020 Emmenbrücke(CH)**

(72) Erfinder: **Lang, Bruno**
**Wilhofweg 1**
**CH-6275 Ballwil(CH)**

(74) Vertreter: **Herrmann, Peter Johannes**
**c/o Rhône-Poulenc Viscosuisse SA Patentabteilung R1P**
**CH-6020 Emmenbrücke(CH)**

Rank Xerox (UK) Business Services

**Beschreibung**

Die Erfindung betrifft eine Reifenkarkasse, aus kalandrierten Kettfäden eines Kordgewebes, die an den Schnittstellen so zusammengefügt sind, daß sie sich berühren und mit wenigstens einem die Schnittstellen überdeckenden Spleißband versehen sind.

Bei Fahrzeugreifen der heutigen Bauart werden die Spleißbereiche (Verbindungsstellen der Karkassengewebe) der quer über den Reifen verlaufenden Kettfäden durch mehr oder weniger starkes Überlappen der Randkettfäden gesichert. Durch diese Technik wird aber die Karkasse im Bereich der überlappenden Kettfäden in ihrem Dehnungs- und Schrumpfverhalten ganz empfindlich gestört. Karkassengewebe mit etwas hohen Schrumpfwerten erfahren im heißen, direkt aus der Vulkanisierform kommenden Reifen im Spleißbereich ein stärkeres Schrumpfen und damit Einschnüren des Reifens.

Karkassengewebe aus Polyester, Nylon oder Rayon mit tiefen Schrumpfwerten ergeben recht dimensionsstabile Reifen, doch zeigen auch sie bei Betriebsdruck von 2 bar oder beim Stehen an der Sonne oder beim Durchfahren eines Wagens durch den LackEinbrennofen, an der Spleißstelle, gegenüber der normalen Karkasse, bis zu 50 % tiefere Dehnungswerte, was wiederum optisch und meßtechnisch als Einschnürung klar erkennbar wird.

Es ist ein Verfahren bekannt (EP-A-O 117 137), das bei der einen überlappenden Karkassenspleißhälfte die Kettfäden in regelmäßigen Abständen durchschneidet und so die störenden Auswirkungen auf Schrumpf und Dehnung weitgehend reduziert.

Ein solches Verfahren hat jedoch den Nachteil, daß das Einschneiden der Kettfäden und das anschließende Spleißen der Gewebezuschnittlinge auf dem Spleißtisch sowie später beim Reifen-Wickelstand sich nur mit großem Aufwand präzise verwirklichen läßt.

Auch ist es nicht ganz einfach, beim Durchschneiden der Kettfäden die Schnittiefe immer bis zum gleichen Kettfaden sicherzustellen, speziell, wenn die Karkassenschnittstellen nicht kettfadengerade verlaufen. Ebenso besteht die Gefahr, daß die eingeschnittenen Kettfäden beim Spleißen nicht ganz unter die Kettfäden der anderen Karkassenspleißhälfte zu liegen kommen und so eine Schwachstelle ergeben.

Aus der DE-A-2819247 sind Reifenkarkassen bekannt, wobei die kalandrierten Kettfäden an den Schnittstellen zusammengefügt und mit einen die Schnittstellen überdeckenden Spleißband versehen werden. Die Fäden des Spleißbandes sind in wesentlichen in einen Winkel von 90° zun Stoß gerichtet. Das hat sich als Nachteil beim Expandieren des Reifenrohlings erwiesen.

Aufgabe der Erfindung ist es, eine Reifenkarkasse zur Verfügung zustellen, welche das bisher nur unbefriedigend gelöste Problem der Spleißstelleneinschnürung auf einfache und sichere Art löst.

Die vorgenannte Aufgabe wird erfindungsgemäß dadurch gelöst, daß die kalandrierten Kettfäden des Spleissbandes in einem Winkel von 10 - 25° zu den Kettfäden der Karkasse verlaufen.

Die Schnittstellen der kalandrierten Kettfäden der zu spleissenden Karkasse werden vorzugsweise möglichst satt aneinader gestoßen, mit einem Spleißband überdeckt und später so vulkanisiert. Das hat den Vorteil, daß an der Spleißstelle keine Verdoppelung von Modul und Schrumpf der Kettfäden stattfinden kann, welche zwangsläufig bei einer Überlappung der Karkassenkettfäden auftritt.

Es ist zweckmäßig, wenn das Spleißband so beschaffen oder im Spleißbereich so angebracht wird, daß dessen Kettfäden mit den Kettfäden der Karkasse nicht parallel verlaufen, sondern einen Winkel zwischen 0 und 90°, vorzugsweise 0 und 45°, insbesondere zwischen 10 und 25° bilden. Damit kann einerseits den unter dem Spleißband liegenden Kettfäden trotzdem eine möglichst homogene Karkassetkettfadenspreizung ermöglicht werden und andererseits wird ein untolerierbares Auseinanderfahren der zusammengestoßenen Karkassenschnittstellen verhindert. Diese Spleißtechnik ermöglicht eine weder meßbare noch sichtbare Einschnürungen am fertigen Reifen.

Es ist aber auch möglich, daß sich die Schnittstellen im Spleißbereich geringfügig überlappen. Dabei ist darauf zu achten, daß besonders bei Karkassen, die schon mit zusätzlichen Gummilagen belegt sind, die Schnittstellen schräg angeschnitten sind und sich nur mit sehr wenigen Kettfäden überlappen.

Es hat sich als vorteilhaft erwiesen, daß sich bei diesen Varianten höchstens 5 kettfäden überlappen dürfen, vorzugsweise weniger als 2 kettfäden. Hierbei ist bereits bei mehr als 2 Kettfäden eine meßbare Einschnürung vorhanden, welche jedoch auf die technische Anwendbarkeit noch keine meßbare Auswirkung zeigt. Es ist zweckmäßig, auch bei der leicht überlappenden Spleißtechnik, ein vorher gummiertes Spleißband zu verwenden, welches den Spleißbereich abdeckt.

Es ist von Vorteil, wenn das Spleißband aus gummifreundlichen, parallelen, kalandrierten Kettfäden besteht, die über die Spleißstelle gelegt, in einem kleinen Winkel zu den Karkassenkettfäden laufen. Auf diese Art werden die zusammengestoßenen oder leicht überlappenden Karkasseschnittstellen beim Expandieren des Reifenrohlings besser zusammengehalten, und die im Spleißband parallel laufenden Kettfäden geben zusätzlich Sicherheit für Fall, daß die zusammengestoßene Schnittstelle sich beim Expandieren doch einmal etwas öffnen sollte. Als Spleißband sind neben Kordgeweben, Fadengelege und Gewirke, an sich jede Art Flächengebilde geeignet, dessen Kettfäden eine höhere Festigkeit aufweisen als seine Schußfäden; es ist aber zweckmäßig, daß die Kettfäden den Karkassefäden möglichst ähnlich sind, jedoch im Anfangsmodul deutlich niedriger liegen. Vorzugsweise sollte der Anfangsmodul unter etwa 50 % des Anfangsmoduls der Karkassenkettfäden liegen. Auch soll der Thermoschrumpf der Kettfäden des Spleißbandes im Thermoschrumpf bei 160°C nicht über 3 % von demjenigen der Karkassekettfäden abweichen. Danach ist es auch zweckmäßig, daß das Schußgarn des Spleißbandes eine Dehnung im Bereich des Schußgarnes der Karkasse aufweist. Es ist zweckmäßig, ein möglichst schwaches und ohne Kraftaufwand dehnbares Schußgarn zu verwenden. Vorteilhaft hat sich auch die Verwendung eines schußgarnfreien Spleißbandes erwiesen, wodurch beim Expandieren eines Reifenrohlings im Spleiß die Kettfäden noch etwas gleichmäßiger gespreizt werden.

Es ist zweckmäßig, ein Spleißband von wenigstens 5 mm und höchstens 100 mm Breite, vorzugsweise von 10 bis 30 mm Breite, zu verwenden.

Die Kettfäden des Spleißbandes bestehen vorzugsweise aus einem in bezug auf die Kettfäden der Karkasse niedermoduligen Faden. Dabei hat sich Nylon 6.6 bei Polyesterkarkassen als besonders geeignet erwiesen. Das Spleißband kann aber auch aus Kettfäden anderer niedermoduligen, adhäsionsfreundlichen und ermüdungsbeständigen, thermoplastischen Synthesegarnen bestehen.

Das Spleißband besteht vorzugsweise aus einer dem Gummi des Reifens angepaßten Qualität, wobei wahlweise auf der Innenseite eine luftundurchlässige Gummischicht verwendet werden kann.

Die Erfindung soll anhand von Zeichnungen beispielhaft näher erläutert werden.

Es zeigen:

Fig. 1a     eine schematische Draufsicht auf eine Schnittstelle im Spleißbereich einer Karkasse nach dem Stand der Technik,

Fig. 1b     einen schematischen Querschnitt durch den Spleißbereich einer Karkasse nach Fig. 1a,

Fig. 1c     eine schematische Seitenansicht einer Spleißstelleneinschnürung am Prüfling bzw. Reifen nach dem Stand der Technik im aufgeblasenen Zustand,

Fig. 2a     eine schematische Draufsicht auf eine Schnittstelle im Spleißbereich einer Karkasse mit sich berührenden Kettfäden und Spleißband gemäß der Erfindung,

Fig. 2b     einen schematischen Querschnitt durch den Spleißbereich einer Karkasse mit sich berührenden Kettfäden gemäß Fig. 2a,

Fig. 2c     eine schematische Seitenansicht der Spleißstelleneinschnürung am Prüfling bzw. Reifen einer Karkasse gemäß der Erfindung in aufgeblasenem Zustand,

Fig. 3a     eine schematische Draufsicht auf eine Variante der Spleißstelle mit überlappenden Kettfäden und Spleißband,

Fig. 3b     einen schematischen Querschnitt durch den Spleißbereich einer Karkasse mit überlappenden Kettfäden und Spleißband,

Fig. 3c     eine schematische Seitenansicht der Spleißstelleneinschnürung am Prüfling bzw. Reifen im aufgeblasenen Zustand,

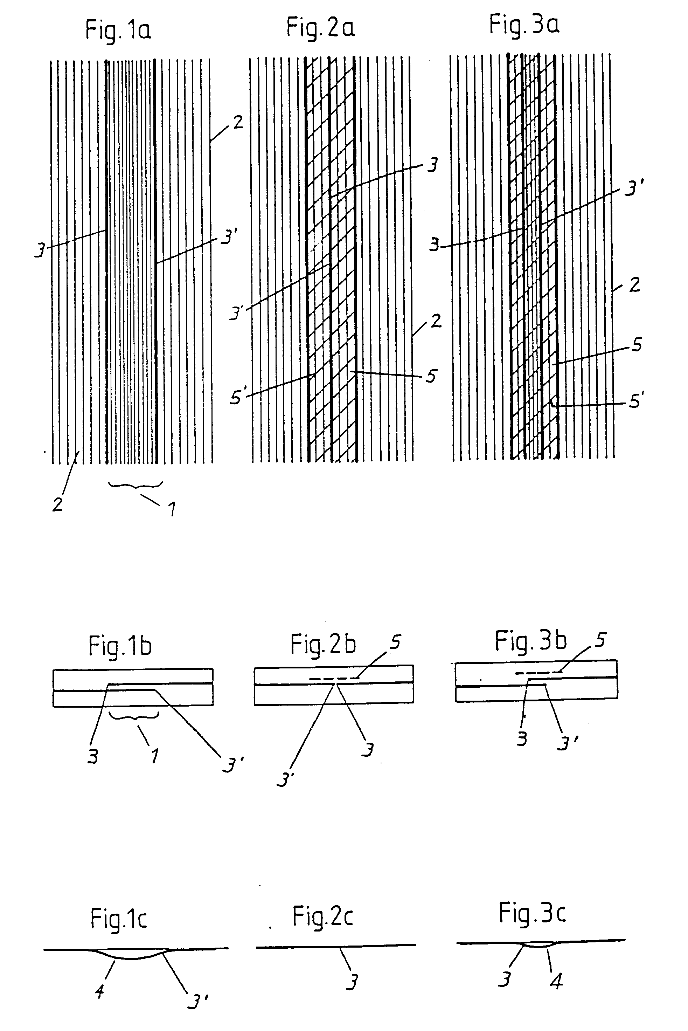

Gemäss Fig. 1a ist mit 1 der Spleißbereich nach dem Stand der Technik bezeichnet. Mehrere Kettfäden 2 einer Karkasse werden überlagert und vulkanisiert.

Fig. 1b zeigt die Überlappung der Schnittstellen 3 und 3' im Spleißbereich 1, wodurch in der Regel etwa fünf Kettfäden 2 beider Karkassenhälften sich überlappen.

Fig. 1c zeigt schematisch eine unter einem Prüfdruck von etwa 2 bar aufgeblasene gespleißte Seitenwand. Eine Einschnürung 4 ist gut sichtbar und beträgt bei etwa 5 sich überlappenden Kordfäden 2 etwa 0.5 mm und mehr.

In Fig. 2a sind die Schnittstellen 3 und 3' so ineinandergestoßen, daß sie sich berühren. Ein gummiertes Spleißband 5 mit schräg verlaufenden Kettfäden 5' wird über die Schnittstellen 3, 3' ein- oder zweiseitig aufgelegt und vulkanisiert. Der Spleißbereich 1 beträgt beispielsweise 15 mm.

In Fig. 2b ist das Spleißband 5 über den Schnittstellen 3 und 3' des Kordgewebes so angebracht, daß gemäß Fig. 2c die Schnittstellen fest aneinander positioniert sind und weder meßbar noch sichtbar eine Einschnürung zeigen.

Die Variante gemäß Fig. 3a stellt einen Kompromiß zwischen der erfindungsgemäßen, vollständig einschnürungsfreien Karkasse und dem Stand der Technik dar. Eine Einschnürung von weniger als 0,2 mm ist mit einer Überlappung von nicht mehr als zwei Kettfäden 2 unter Anbringung eines Spleißbandes 5 erzielbar.

Fig. 3b zeigt den Spleißbereich 1 mit etwa zwei sich überlappenden Kettfäden 2, deren Schnittstellen 3 vom Spleißband 5 überdeckt werden. Gemäß Fig. 3c kommt es an den Schnittstellen 3 zu einer technisch unbedeutenden, jedoch geringfügig sichtbaren Einschnürung 4.

Beispiele

Aus einem industriell hergestellten und kalandrierten Reifenkordgewebe aus Polyester mit dtex 1100 x 2, hergestellt aus einem Z/S-Zwirn 445/445 T/m und 110 Kettfäden/dm und einer Dehnung bei 44 N von 4,8 % und einem Thermoschrumpf von 2,6 % bei 160°C am Kord, wurden Prüflinge von ca. 360 x 160 mm hergestellt.

Als Spleißbänder wurden Nylonbänder aus Reifenkord von dtex 940 x 2 mit Z/S-Zwirn 472/472 T/m, 2,3 % Thermoschrumpf bei 160°C verwendet.

Die einzelnen Varianten 2 - 7 des erfindungsgemäßen Verfahrens gehen aus nachfolgender Tabelle hervor.

Spleißstelleneinschnürungen mit und ohne Spleissband

Karkassengewebe:     Polyester dtex 1100 z 445 x 2 s 445 und 110 Kettfäden/dm

| Karkassenspleißprüfling | Überlappungsgrad am Spleiß | | Benotung bei 2 bar Prüfdruck | |
|---|---|---|---|---|
| | Anzahl überlappende Kettfäden | Spleißband (15 mm breit) | Spleißeinschnürung in mm | optisch sichtbare Einschnürung |
| Var. 1 | 0 | ja | 0 | nein |
| 2 | 2 | ja | $\sim 0.1$ | ja |
| 3 | 5 | nein | $\sim 0.5$ | ja |
| 4 | 5 | ja | $\sim 0.5$ | ja |
| 5 | 10 | nein | $\sim 0.6$ | ja |

Aus der Tabelle geht hervor, daß die Variante ohne Überlappung mit Spleißband weder einen optisch erkennbaren Effekt, noch eine meßtechnische erfaßbare Einschnürung ergibt. Eine Spleißstelle mit 2 Kettenfäden-Überlappung und Spleißband gibt eine gerade noch feststellbare Einschnürung. Alle Spleißstellen mit 5 oder mehr überlappenden Kettfäden mit oder ohne Spleißband ergeben untolerierbare Spleißeinschnürungen.

Das erfindungsgemäße Verfahren ermöglicht auf einfache und wirtschaftliche Weise, Einschnürungen an Reifenkarkassen und damit Einschnürungen an Luftreifen zu vermeiden oder in tolerierbaren Grenzen zu halten. Die Anwendung des Verfahrens ist nicht auf Reifen beschränkt. Auch für Nachstellen von anderen mit Gas oder Flüssigkeit gefüllten Erzeugnissen, wie Schlauchboote, Zelte und Wasserbetten, ist das Verfahren anwendbar.

**Patentansprüche**

1. Reifenkarkasse, aus kalandrierten Kettfäden (2) eines Kordgewebes, die an den Schnittstellen (3,3') so zusammengefügt sind, daß sie sich berühren und mit wenigstens einem die Schnittstellen (3,3') überdeckenden Spleißband (5) versehen sind, dadurch gekennzeichnet, daß die kalandrierten Kettfäden (5') des Spleißbandes (5) in einem Winkel von 10-25° zu den Kettfäden (2) der Karkasse verlaufen.

2. Reifenkarkasse nach Anspruch 1, dadurch gekennzeichnet, daß die Kettfäden (5') des Spleißbandes (5) einen niedrigeren Anfangsmodul aufweisen als die Kettfäden (2) der Karkasse, und der Thermoschrumpf des Spleißbandes (5) höchstens 3 % höher als derjenige der Karkasse ist.

3. Reifenkarkasse nach Anspruch 2, dadurch gekennzeichnet, daß Schußfäden, des Spleißbandes (5) eine Dehnung in der Größenordnung derjenigen Schußfäden der Karkasse aufweisen.

4. Reifenkarkasse nach Anspruch 2, dadurch gekennzeichnet, daß das Spleißband (5) eine Breite von wenigstens 5 mm aufweist.

5. Reifenkarkasse nach Anspruch 2, dadurch gekennzeichnet, daß das Spleißband (5) aus Polyamid besteht.

**Claims**

1. Tyre carcass, of calendered warp threads (2) of a cord fabric, which are joined together at the intersections (3, 3') in such a way that they touch one another and are provided with at least one splicing strip (5), covering the intersections (3, 3'), characterised in that the calendered warp threads (5') of the splicing strip (5) run at an angle of 10-25° with respect to the warp threads (2) of the carcass.

2. Tyre carcass according to Claim 1, characterised in that the warp threads (5') of the splicing strip (5) have a lower initial modulus than the warp threads (2) of the carcass, and the thermal shrinkage of the splicing strip (5) is at most 3% higher than that of the carcass.

3. Tyre carcass according to Claim 2, characterised in that weft threads of the splicing strip (5) exhibit an extension of the order of magnitude of those weft threads of the carcass.

4. Tyre carcass according to Claim 2, characterised in that the splicing strip (5) has a width of at least 5 mm.

5. Tyre carcass according to Claim 2, characterised in that the splicing strip (5) consists of polyamide.

**Revendications**

1. Carcasse de pneu d'un tissu de fils dont les fils de chaîne sont calandrés (2) et sont rassemblés aux sections (3, 3'), de manière à ce qu' ils se touchent et dont au moins une des coupes (3.3') soit recouverte d'une bande fibrillée (5) caractérisé en ce que les fils de chaine calandrés (5) de la bande fibrillée (5) sont dirigés dans un angle de 10-25°C par rapport aux fils de chaîne (2) de la carcasse.

2. Carcasse de pneu selon la revendications 1 caractérisé en ce que les fils de chaîne (5') de la bande fibrillée (5) ont un module initial plus faible que les fils de chaîne (2) de la carcasse et que le rétrécissement au traitement thermique de la bande fibrillée (5) est au maximum supérieur de 3 % à celui de la carcasse.

3. Carcasse de pneu selon la revendication 2 caractérisé en ce que le fil de trame de la bande fibrillée (5) a un allongement dans un ordre de grandeur du fil de trame de la carcasse.

4. Carcasse de pneu selon la revendication 2 caractérisé en ce que la bande fibrillée (5) a au moins une largeur de 5 mm.

5. Carcasse de pneu selon la revendication 2 caractérisé en ce que la bande fibrillée (5) soit du polyamide.

Fig. 1a

Fig. 2a

Fig. 3a

Fig. 1b

Fig. 2b

Fig. 3b

Fig. 1c

Fig. 2c

Fig. 3c